# EUROPEAN PATENT SPECIFICATION

(11) **EP 3 752 476 B1**
(45) Date of publication and mention of the grant of the patent: **29.11.2023**
(21) Application number: 19714854.7
(22) Date of filing: 30.01.2019
(51) Int. Cl.: C04B 35/18, B28B 1/00, B28B 7/46, C04B 33/04, C04B 33/135, C04B 33/138, C04B 33/36, C04B 35/80, C04B 35/82, B29C 64/165

(54) **ADDITIVE MANUFACTURING OF AN INORGANIC GEOPOLYMER OBJECT**
GENERATIVE FERTIGUNG EINES ANORGANISCHEN GEOPOLYMEROBJEKTS
IMPRESSION 3D D'UN OBJET GÉOPOLYMÈRE INORGANIQUE

(30) Priority: 15.02.2018 NL 2020447
(43) Date of publication of application: 23.12.2020
(73) Proprietor: Concr3de B.V., 3089 JW Rotterdam (NL)
(72) Inventor: BALDASSARI, Matteo, 3037 VM Rotterdam (NL); GEBOERS, Eric, 3022 GH Rotterdam (NL)
(74) Representative: Arnold & Siedsma
(86) International application number: PCT/NL2019/050053
(87) International publication number: WO 2019/160405

(56) References cited:
- WO-A1-2017/050946
- US-A1- 2013 157 013
- US-A1- 2017 320 128
- US-B1- 8 475 946
- PANDA BIRANCHI ET AL: "Additive manufacturing of geopolymer for sustainable built environment", JOURNAL OF CLEANER PRODUCTION, ELSEVIER, AMSTERDAM, NL, vol. 167, 22 August 2017 (2017-08-22), pages 281-288, XP085180799, ISSN: 0959-6526, DOI: 10.1016/J.JCLEPRO.2017.08.165

## Description

The present patent disclosure concerns a method for producing an object by additive manufacturing.

The additive manufacturing, or 3D printing, of inorganic polymers or materials such as concrete are cumbersome due to hardening of the resins or mixtures that form the inorganic polymers inside the additive manufacturing equipment, such as print heads. This means that the additive manufacturing equipment needs to be thoroughly cleaned regularly, also during the manufacturing of an object, to avoid clogging of equipment with these hardening materials. Once clogged, the equipment may have to be discarded.

Patent document US 2017/320128 A1 describes a method for constructing molds and cores layer by layer, the molds and cores comprising a construction material mixture. The construction material mixture comprises a refractory molding base material and a binder, i.e. a ceramic material. An example of a refractory molding base material is fireclay. Use is made of aqueous water glass solution in the method. The molds and cores are casting molds used in metal casting, which have sufficient stability and heat resistance to accommodate liquid metal. The material of the molds and cores has to decompose under the action of the heat given off by the metal so that it loses its mechanical strength.

Patent documents US 8,475,946 B1 and US 2013/0157013 A1 describe similar examples of layer by layer ceramic material production methods. In general, when producing these ceramic materials, to obtain a hardened object, the object has to be heated up to high temperature in a furnace.

Other examples of additive manufacturing can be found in patent document WO 2017/050946 A1 and in Panda Biranchi et al., Journal of Cleaner Production, Vol.167, 22 August 2017, pp.281-288.

The present patent disclosure has for its object to at least partially alleviate the above noted problems and/or other problems.

According to the invention, there is provided a method for producing an object by additive manufacturing, the method comprising at least one repetition of the steps;
- providing a layer of particulate material on a surface;
wherein the particulate material comprises:
15 to 70 wt% of an aluminosilicate oxide based compound having a Si:Al molar ratio in the range of 0.7 to 2.5, wherein the aluminosilicate oxide based compound is an anhydrous pozzolanic aluminosilicate compound, and an inorganic aggregate;
- compacting the layer of particulate material provided on the production surface whereby a compacted layer of particulate material having a density of between 1.4 and 1.8 g/cm³ is formed;
- providing a liquid composition on the compacted layer of particulate material, wherein the liquid composition is provided on the compacted layer using a piezoelectric print head, wherein the liquid composition is provided in drops having a drop size of 100 to 200 picoliter, wherein the liquid composition is an aqueous solution comprising 10 to 50 wt% alkali metal silicate having a molar ratio of Si:M in the range of 0.7 to 1.5, wherein M is an alkali metal; and
- forming the object by allowing the liquid composition to react with the particulate material.

Beneficially and contrary to producing ceramic materials, the object made according to the above method gains sufficient strength without a subsequent post processing step such as heating/firing step in a furnace. For ceramic materials, strengthening only occurs after firing in a furnace. The strengthening occurring in the present method is due to the combination of the anhydrous pozzolanic materials in the particulate material. The object achieves a compressive strength from 10 MPa-35MPa without a heating step after the liquid composition is applied onto the particulate material.

In particular, the combination of the particulate material with the liquid composition comprising alkali metal silicate having a molar ratio of Si:M in the range of 0.7 to 1.5 surprisingly gives surprisingly improved strengths of the produced object as compared to compositions with alkali metal silicates outside that range. Molar ratios of Si:M with a higher range, for instance, dry much fast and bond like a water soluble glue. The bond is therefore very weak, not durable and water soluble. The present method overcomes this disadvantage, by virtue of the Si:M molar ratio of the liquid composition.

Preferably the anhydrous pozzolanic aluminosilicate compound is a calcined anhydrous pozzolanic aluminosilicate compound, such as fly ash type F and metakaolin.

The anhydrous pozzolanic aluminosilicate compound is preferably selected from the group consisting of fly ash class F, metakaolin, pozzolanic volcanic ash. These are all examples of calcined anhydrous pozzolanic aluminosilicate compounds.

In the method, the liquid composition by itself is not reactive, and therefore does not solidify inside the additive manufacturing equipment, such as the piezoelectric print head and the liquid providing components thereof. The liquid composition furthermore may have constant rheological properties allowing the fluid to be ejected by piezoelectric print heads. The liquid composition, when provided onto the particulate material, will react with at least with the aluminosilicate oxide based compound to form a polysialate and a matrix is formed between the inorganic, preferably reactive, aggregate and aluminosilicate oxide based compound to form a hardened object.

The liquid composition is provided using a piezoelectric printing head.

The method allows the use of piezoelectric printing heads due to the liquid composition preferably having a relatively low viscosity in a range of 8 to 30 mPa s. As will be understood, the repetition of the steps, including providing the liquid composition at selected parts of the particulate material layer, will cause an object to be formed, as in additive manufacturing. Beneficially, the method, wherein the liquid composition is used with dissolved alkali metal silicate, can be printed in droplets ranging from 100-200 pL, and can therefore be used for high resolution 3D printing. The resolution may be as high as 400 dpi or higher.

The alkali metal M in the alkali metal silicate is preferably K, Na, or Li, most preferably K.

The molar ratio of Si:M in the range of 0.7 to 1.5 of the alkali metal silicate results in a solution having for instance a pH between 12 and 13.5 in case a 60 wt% water (with e.g. 40 wt% alkali metal silicate) solution is used. This solution may therefore be easily handled and results in a low corrosiveness for the equipment in physical contact with this solution.

Beneficially, a typical compressive strength of the produced object ranges between 10 MPa to 70 MPa.

In an embodiment, the weight ratio of the alumina silicate based compound and the liquid composition is in the range of 1.5 to 3.5, preferably 1.8 to 2.4. These preferred weight ratios provide for a combination of the powder composition and the liquid composition that have a sufficiently matching stoichiometry to allow for a sufficient degree of polymerisation of the produced object.

In an embodiment, the aluminosilicate oxide based compound has a Si:M ratio in the range of 0.8-2.2. This range is particularly suitable for use with the liquid composition, allowing an improved polymerization of the object.

In an embodiment, the aluminosilicate oxide based compound may comprise one or more selected from the group consisting of fly ash class F, fly ash class C, kaolin, metakaolin, rice husk ash, silica fume, pozzolanic volcanic ash, pumice, zeolite, chamotte, mica, corundum, aluminum hydroxide and potassium feldspar. The materials fly ash class F, fly ash class C, kaolin, and metakaolin contain both Si and Al. In order to obtain the Si:Al ratios described above, the other materials rice husk ash, silica fume, pozzolanic volcanic ash, pumice, zeolite, chamotte, mica, corundum, aluminium hydroxide, and potassium feldspar can be combined. For example corundum and aluminium hydroxide, as Al containing compounds, may be combined with silica fume or rice husk, as Si containing compounds, in order to obtain the Si:Al ratios described above.

Preferably, the aluminosilicate oxide based compound is fly ash class F or metakaolin. Fly ash class F and metakaolin are available within a Si:Al ratio as described above. Preferred fly ash class F has a Si:Al ratio in the range of 1.5-2.2, or about 1.8 (or 3.7 in terms of SiO₂:Al₂O₃). Preferably, metakaolin has a Si:Al ratio in the range of 0.8-1.4, or about 1.1 (or 2.2 in terms of SiO₂:Al₂O₃).

Fly ash class F, or type F, is typically coal fly ash, in particular from burning anthracite or bituminous coal, often used in concrete where cementious or pozzolanic action or both is desired. The fly ash Class F has pozzolanic properties. Fly ash type F comprises Si, Al and Fe oxide compounds.

In a preferred embodiment, the particulate material comprises the aluminosilicate oxide based compound in a range of 15-35 wt% and the aluminosilicate oxide compound is metakaolin. Metakaolin (Al₂O₇Si₂), or calcined kaolin or dehydroxylated kaolin, is kaolin where between the layers of SiO₂ and Al₂O₃ in proportion 1:2 water is imbedded and can be evaporated through heat treatment by calcination at a temperature between 600 and 750 degrees.

In an alternative embodiment, the particulate material comprises the aluminosilicate oxide based compound in a range of 50 to 70 wt% and the aluminosilicate oxide compound is fly ash class F.

In an embodiment, the aluminosilicate oxide based compound comprises a total amount of Si and Al in the range of 35 to 58 wt%. These weight percentages are noted in terms of total weight of Si and Al atoms present. In the field of ceramics often such weight percentages are denoted in terms of oxide units such as SiO₂ and Al₂O₃, even though these compounds may not be actually present chemically. The range of 35 to 58 wt% in terms of Si and Al becomes equal to 60 to 100 wt% in terms of a total amount of SiO₂ and Al₂O₃.

In an embodiment, the aluminosilicate oxide based compound comprises at most 10 wt% Ca, preferably less than 5 wt%. Higher Ca-containing materials, for instance lignite fly ashes (class C), can have a hardening time that is too short to allow a sufficient polymerization and consequently results in a weaker final object. It is however noted, that higher Ca-content (e.g. above 5 or 10 wt%) may be still be successfully used in the present methods because the particulate material and the liquid composition are not actively (mechanically) mixed, but wetting/diffusion of the powder by the liquid composition applied onto the particulate material is relied on, thereby reducing the reaction speed and increasing the hardening time.

In an embodiment the particulate material has one or more of
- a mole ratio of M:Si in the range of 0 to 0.4,
- a mole ratio of M:Al in the range of 0 to 1,
- a mole ratio of Si:Al in the range of 1 to 3,
- a mole ratio of Ca:Si in the range of 0 to 0.6,
wherein M is an alkali metal. In calculating the above ratios, the filler material is excluded. The following oxide mole ratios aim at creating different range of materials with different mechanical performances (the embodiments) with Si:Al atomic ratio from 1 to 3.
The ratios are beneficial for the correct stoichiometry between reagent (the liquid composition) and reactant (the particulate material) using the methods described herein and depending on the raw materials chosen.

For instance, the M:Si ratio is preferably in the range of 0 to 0.4. The chosen ratio within this range depends on the raw materials used, having a certain Si:Al ratio, and if the alkali metal silicate, most preferably potassium silicate, is also present in a powder form in the particulate material. A higher ratio potassium silicate or anhydrous potassium silicate would be highly corrosive and may be potentially harmful for people handling the powder.

The Ca ratio may influence the curing speed on the printing bed and the final compressive strength. The Ca:Si ratio, coming from the optional slag, is also larger than conventional inorganic (K,Ca) polymer because the slag does not dissolve completely after the supply of the liquid so part of the Ca will act as an aggregate. It has been observed that between 50 and 70% of the slag is dissolved, while the remaining slag acts as an aggregate in the geopolymer matrix.

In an embodiment, the inorganic aggregate or filler comprises at least one from the group consisting of quartz, silica, cristobalite, zircon, chromite, staurolite, graphite, corundum, granite and alkali feldspathic rock. The most preferred, because of for instance final mechanical performances, availability, costs of the raw material and behaviour in the particles packing and compaction, are: Quartz sand, cristobalite sand, granite sand and alkali feldspathic rocks. Potassium feldspar is preferred as alkali feldspathic rock.

The filler characteristics suggested to have better material performances are: aggregates chemically interacting on the surface with the material system with high SiO₂ content and (K,Na,Li)₂O preferably with irregular crystal structure and shape to increase the superficial bond in the inorganic polymer matrix and consequently the final compressive strength.

Water absorption for the aggregates is preferably smaller than 10 wt%, preferably in the range of 0-5wt%, to avoid the fillers to absorb the reagent.
The particle size distribution for the aggregates depends on final layer size of the material system.

In an embodiment, the compacted layer of particulate material has a thickness in the range of 40 to 400 µm, preferably 60 to 200 µm. With this range of layer thickness, combined with the used liquid composition, the resolution that can be achieved is 400 dpi.

In an embodiment, the particulate material has a particle size distribution with a mass diameter D₉₀ equal to or smaller than one thickness of the compacted layer of particulate material, preferably half a thickness of the compacted layer of particulate material. This distribution ensures that the largest particles are within a layer thickness, and result in a sufficiently flat layer.

In an embodiment, the particle size distribution has a mass diameter D₁₀ in the range of 5 to 20 µm, and a mass diameter D₅₀ in the range of 20 to 50 µm and D₉₀ in the range of 50 to 100 µm. This distribution allows achieving a homogenous distribution of particles.

The terms D₁₀, D₅₀, D₉₀ and the like are generally used to indicate a particle size distribution. The size indicated by D₁₀ indicates that 10 wt% of particles has a size less than that size. The size indicated by D₅₀ indicates that 50 wt% of particles has a size less than that size. The size indicated by D₉₀ indicates that 90 wt% of particles has a size less than that size.

In an embodiment, the particulate material further comprises 5 to 15 wt% of a calcium-containing aluminosilicate oxide compound comprising at least 34wt% Ca. The addition of Ca, in a controllable amount, allows the reaction time of the liquid composition with the particulate material to decrease, wherein the polysialate is formed. In this way, a further curing step by heating of the final object after all the repetitions of the method, can be avoided. The use of a Ca containing compound also benefits the compressive strength performance of the final material and the curing time.

In a preferred embodiment, the calcium-containing compound is selected from the group consisting of calcium disilicate, ground granulated blast furnace slag, calcium melilite, fly ash class C, and calcium hydroxide. When using fly ash class C, the Ca, Al and Si ratio may be adjusted according to the fly ash class C chemical composition. The preferred compound is ground granulated blast furnace slag (GGBS) because of his availability as a by-product and its chemical composition. For slag the total Al₂O₃ amount is between 9 and 12 wt% and total SiO₂ + Al₂O₃ wt% is in a range of 40 to 50 %. Melilite minerals are a naturally occurring analogue of GGBS. Calcium hydroxide and calcium disilicate can be sourced from limestone quarries.

In an embodiment, the particulate material further comprises 0.5 to 8 wt% of an anhydrous metasilicate compound. The anhydrous metasilicate compound may be potassium silicate, sodium silicate and/or lithium silicate in powder form preferably having a particle size distribution with a D₅₀ between 5 and 50 µm. Preferably the anhydrous metasilicate is potassium silicate. The use of this metasilicate has the effect of allowing for a decrease in the concentration of alkali metal in the liquid composition thus increasing the Si:M molar ratio in the liquid and consequently reducing the alkalinity of the liquid composition. This improves the life time of print heads and fluid deposition equipment.

In an embodiment, the particulate material further comprises 2 to 8 wt% of at least one from the group consisting of basalt fiber, glass fiber, carbon fiber, silicon carbide fibers. This increases the tensile strength of the produced object.

In an embodiment, the liquid composition is provided on the compacted layer at a temperature in the range of 25 to 60 °C, preferably 30 to 50 °C.

In an embodiment, the method further comprises heating the object at a temperature in a range of 40 to 70 °C for at least one hour.

In an embodiment, the method further comprises, applying a heat treatment during a repetition of the steps using electromagnetic radiation, preferably dielectric heating infrared light or microwave radiation.

According to the invention, the liquid composition is provided on the compacted layer using a piezoelectric print head, wherein the liquid composition is provided in drops having a drop size in a range of 100 to 200 picoliter.

In an embodiment, the liquid composition has a viscosity in a range of 8 to 30 mPa·s.

In an embodiment, the liquid composition has a surface tension in a range of 20×10⁻³ to 40×10⁻³ N/m.

In an embodiment, the liquid composition has a density in a range of 1.2 to 1.6 g/cm3.

In an embodiment, the liquid composition comprises at least one selected from the group consisting of fatty alcohol ethoxylates, alkylphenol ethoxylates, ethoxilated amines, fatty acid amides, glycerol alkyl polyglucosides, amine oxides, sulfoxides, phosphine oxides, lignin sulfonates. These compounds act as surfactants, which helps to control the drop forming in the print head, and further aids the penetration of the liquid composition into the particulate material layer when the liquid composition is deposited thereon.

Described herein is also an object comprising a layered structure comprising a polysialate matrix with inclusions of an aluminosilicate oxide based compound having a Si:Al molar ratio in the range of 0.7 to 2 and an inorganic aggregate, wherein the matrix is fixedly connected to at least a part of the surfaces of the aluminosilicate oxide based compound, wherein layers of the layered structure are stacked in a layer direction parallel to the layers, wherein in each layer of the layered structure the matrix has a varying degree of polymerization in a direction perpendicular to the layer direction.

The object can be produced by a method according to the invention.

Additive manufacturing methods according to the invention produce objects having n object having a layered structure. By using according the invention, it is possible to change the degree of polymerization due to the reaction occurring at a varying degree by the penetration depth of the liquid composition into the particulate material layer. Products made by a method according to the invention have a relatively homogeneous structure compared to other additive manufacturing techniques such as fused deposition modelling (FDM)

Further described herein is a kit of parts, the kit of parts comprising a package of the particulate material described above. The kit of parts may further comprise a container including the liquid composition described above.

### Brief description of figures

The accompanying drawings are used to illustrate exemplary embodiments of methods of the present patent disclosure. The above and other advantages of the features and objects of the present patent disclosure will become more apparent and the present patent disclosure will be better understood from the following detailed description when read in conjunction with the accompanying drawings, in which:
Figure 1 shows a schematic view in perspective of an additive manufacturing device for use in a method according to the present patent disclosure;
Figure 2 schematically illustrates a cross section of a piezoelectric print head for use in a method according to the present patent disclosure;
Figure 3A schematically illustrates a perspective view of providing droplets of liquid composition on a compacted powder layer;
Figure 3B schematically illustrates a top view of providing the droplets of liquid composition on a compacted powder layer as shown in Fig. 3A;
Figure 3C schematically illustrates a perspective view of droplets of liquid composition provided on and diffusing into the compacted powder layer of Fig. 3A and 3B;
Figure 3D schematically illustrates a top view of of droplets of liquid composition provided on and diffusing into the compacted powder layer of Fig. 3C;
Figure 4A schematically illustrates a cross section of a compacted layer of powder with droplets of liquid composition illustrated above the compacted layer of powder;
Figure 4B schematically illustrates a cross section of a compacted and reacted layer of powder with a further layer compacted on top and reacting;
Figure 5 schematically illustrates a cross section of the compacted layer of Figure 4A in a larger scale;
Figure 6 schematically illustrates the cross section of the compacted layer of Figure5 after reaction with the liquid composition;
Figure 7A schematically illustrates a three dimensional representation of an AlO₄ and a SiO₄ tetrahedral tridimensional unit linked by a shared oxygen as in sialate;
Figure 7B schematically illustrates a structural formula of the AlO₄ and a SiO₄ tetrahedral tridimensional unit linked by a shared oxygen of Fig. 7A;
Figure 8 schematically illustrates a structural formula of an alkalinised sialate unit;
Figure 9 schematically illustrates a structural formula of two polycondensated alkalinised sialate units; and
Figure 10 schematically illustrates multiple sialate units that are polymerized to form a three dimensional framework such as polysialate and the like.

### Detailed description

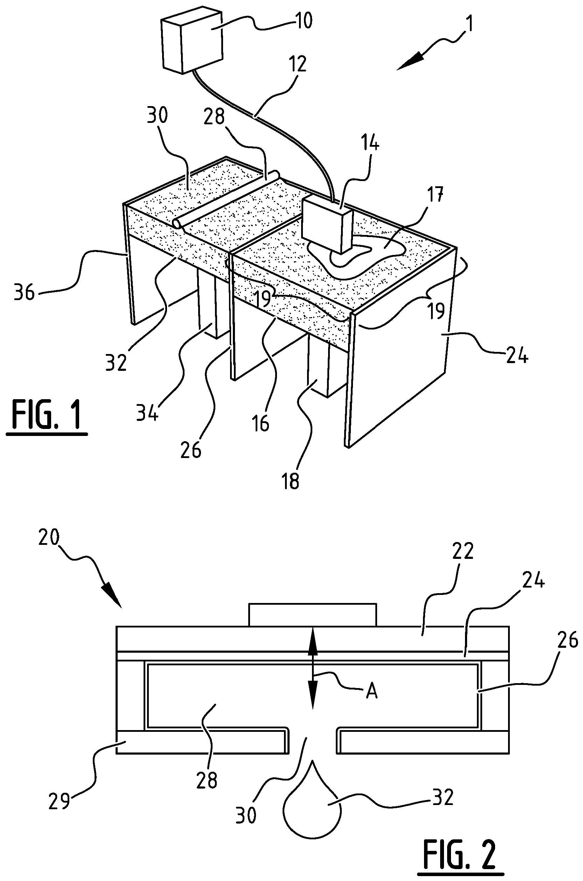

The additive manufacturing, or 3D printing, device 1 of Fig. 1 comprises a piezoelectric print head 14, configured to distribute one or more droplets onto a selected position of a compacted layer of particulate material or powder 20. The printing head 14 is positioned by a x-y positioning system, which is not shown in the figure. The printing head 14 is supplied with a liquid composition as described above and below by a fluid delivery system comprising a container 10 and a tube 12, providing a fluid connection between the container 10 and the printing head 14. On positions of the powder layer 20 where liquid composition has been provided, the powder and the liquid composition react to form a solid object 17.

After the liquid composition is provided onto all the wanted x-y positions of a current layer of powder, a new layer of powder is provided from the powder reservoir 30 with roller 28. The powder reservoir comprises a movable floor 32 which can be lowered and raised by actuator 34. When a new layer of powder is required on the 3D printing area 19 with powder 20, the actuator raises the floor 32 slightly such that the powder in the reservoir 30 is raised above an upper edge 27 of separation wall 26. The powder 20 in the 3D printing area 19 rests on floor part 16 which is then slightly lowered by actuator 18. This lowers the upper surface of the powder 20 and the object 17, which are at roughly equal heights.

The compactor, here embodied as roller 28, may then push or shove the powder over the upper edge 27 into the 3D printing area 19. The roller 28 is configured to also compact the newly added powder onto the other already compacted powder 20 and object 17. Then, the new layer, having a thickness of for instance 100 or 200 µm, is ready for another addition of liquid composition to further manufacture the object 17.

The printing head 14, or so called "Drop on Demand" device, preferably comprises a plurality (e.g. 50 or 100 or more) of piezoelectric elements configured to provide droplets of liquid composition 32 on demand. The piezoelectric elements are configured to be controlled electronically, e.g. by a computer. One such piezoelectric element 20 is shown in Fig. 2, comprising a piezoelectric layer 22 and a protecting layer 24 for protecting the piezoelectric layer 22.

The piezoelectric element 20 comprises a hollow chamber 28 for holding liquid composition and an opening 30 from and/or by which the droplet 32 may be produced. The piezoelectric layer 22 is configured to move up and down according to the arrow A, such that the liquid composition inside the space 28 may be pushed out of the opening 30. The walls 29 of the piezoelectric element 20 surrounding the hollow space 28 may comprise a protective layer 26 at the side of the chamber 28 to protect the piezoelectric element 22 from the alkaline liquid composition, which may have a relatively high pH, for instance above 12. Preferably, the protective layer 26 is configured to withstand an aqueous alkaline solution having a pH between 12 and 14.

With the material system of the present patent disclosure, the material system including the used particulate material composition and liquid composition, together with a 3D printing system such as described above, allow for the manufacturing of complex shapes using an automated process. The manufactured object has mechanical properties comprising a compressive strength in a range of 0.5 and 70MPa and a tensile strength in a range of 0.2 to 30 MPa, the resulting material is also non-flammable and can resist to temperature up to 1300 °C.

The main particulate material precursors are aluminosilicates, optionally either minerals or by-products produced from combustion during common industrial processes. This makes the material inexpensive compared to other additive manufacturing processes and the entire system can be scaled up for the production of large parts for the manufacturing and construction industry. Another advantages of any of the methods of the present patent disclosure are the low environmental impact compared to methods where polluting and dangerous organic polymers like polymethylmethacrylate, polyvinyl alcohol, furan and phenolic resins or other organic binding systems were used to bind particles in binder jetting techniques.

The material environmental impact can also be compared to Portland cement/concrete, with a total reduction of CO₂ emissions of above 80 to 90%. This is possible because the unbonded material is completely reused in the additive manufacturing process and molds are not necessary as in conventional techniques. Besides that the material system is calcium carbonate free, it has low CO₂ emissions during the fabrication process and the aluminosilicates can be industrial by-products like GGBS and fly-ashes.

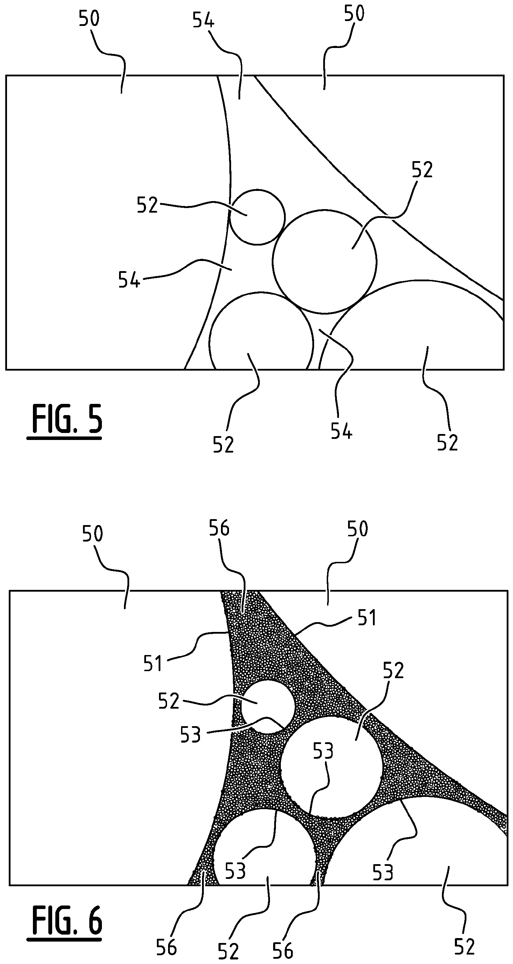

The particulate material is deposited by the powder scattering system including the roller 28, floors 16 and 32 and actuators 18 and 34, and compacted by the roller 28 configured to deposit and create a compact powder layer with decreased interstitial voids between particles and decreased porosity. The density of the compacted material reaches values between 1.4 and 1.8 g/cm3. The particle size distribution, or "granulometry", of the particulate material as described below allows to achieve a homogeneous distribution of particles and the final properties of the hardened material as shown in Fig 6.

The final particulate powder mixture has a preferred particle size between 5 and 300 µm with a particle size distribution with D₉₀ smaller than a layer thickness, preferably half a layer thickness. With half a layer size, scattering, compaction and packing of the particles is improved. Such a particle size distribution achieves a compact layer and a particle packing with a reduced volume of air voids in the material system. Preferably, the use particles having a size below 5 µm is avoided, because of the tendency to agglomerate (flocculation). A D₁₀ larger than 5 µm is preferred.

Optionally, the 3D printing area surrounding walls and/or floor or the powder scattering system are vibrated to improve the particle packing of the particulate material in the 3D printing area 19.

The particulate material is a powder mixture comprising an inorganic aggregate material and aluminosilicate oxide based compound. Preferably, to obtain a homogeneous mixture, the particulate material mixture is mixed before starting the additive manufacturing method. The mixing is done preferably for at least 10 minutes, e.g. approximately 1 hour, using a high shear or a standard powder mixer, or until a homogeneous mixture is obtained.

The mole ratios of the metal constituents in the powder mixture, excluding the inorganic aggregate, are preferably:

| | |
|---|---|
| • M:Si | 0 to 0.4 |
| • M:Al | 0 to 1 |
| • Si:Al | 1 to 3 |
| • Ca:Si | 0 to 0.6 |
| • Ca:Al | 0 to 1, |

or in terms of corresponding oxides:

| | |
|---|---|
| • M₂O:SiO₂ | 0 to 0.2 |
| • M₂O:Al₂O₃ | 0 to 1 |
| • SiO₂:Al₂O₃ | 2 to 6 |
| • CaO:SiO₂ | 0 to 0.6 |
| • CaO:Al₂O₃ | 0 to 2 |

M is an alkali metal, preferably K, Na and/or Li, most preferably K.

The oxide mole ratios may be denoted in terms of standard corresponding oxides such as SiO₂ and Al₂O₃, even though these oxides may not actually be present in the powder. This is common in the field of ceramics applications. For instance, kaolinite in terms of its chemical formula is Al₂Si₂O₅(OH)₄, which may be denoted in terms of oxides as Al₂O₃·2SiO₂·2H₂O, even though the latter oxides are not actually present in the material.

The particulate material comprises the following particulate materials:
a) An alumino-silicate oxide based compound, such as a mineral or synthetic compound, preferably containing Ca < 10 wt% and molar ratio SiO₂:Al₂O₃ in a range of 1.5 to 4, SiO₂+Al₂O₃ = 60-100% by weight of the total chemical composition. Examples of aluminosilicates materials are: Fly ashes class F, fly ashes class C, hydroxylated kaolin or metakaolin, kaolin, natural pozzolanic vulcanic ashes, zeolites, chamotte, mica, potash feldspar. Some precursors can be combined to achieve the right supply of SiO₂ and Al₂O₃ like: corundum, aluminum hydroxite, sodium aluminate, rice husk, silica fume and aluminium oxide. The preferred particle size (granulometry) distribution is D₁₀ < 4 µm, D₅₀ < 20 µm µm, D₉₅ < 90 µm .
b) An inorganic aggregate, acting as an inorganic, preferably reactive, filler. The aggregate may be a mineral sand like: quartz sand, cristobalite Sand, alkali feldspathic rocks, granite powder, zircon sand, chromite sand, staurolite, graphite, alumina trihydroxide, corundum sand or/and carbon, silicate sand. Reactive fillers chemically and physically interacting with the material system are preferred. Also fillers with high content of SiO₂ and/or (K,Na,Li)₂O are preferred. Another preferred embodiment is a filler with a crystal structure and irregular shape suitable for increasing the number of bonds with the inorganic polymer matrix. Examples of such fillers are cristobalite sand, granite powder or in general alkali feldspathic rocks where the filler reacts on the surface with the inorganic polymer matrix. Water absorption for the fillers is preferably smaller than 10 wt%, more preferably smaller than 5 wt% to avoid that the fillers to absorb the liquid composition. It is preferred to use an inorganic aggregate with a bulk density larger than 1.2 g/cm3. Such densities improve the compaction of the powder and allow to have a compacted density of the powder mixture larger than 1.4 g/cm3. The shape, specific density and particle size distribution of mixed particles affect the particles packing and compaction properties. The latter density improves the stability of the wet powder when the fluid penetrates the powder layer;
c) Optionally the powder mixture may further comprise a calcium source compound such as calcium disilicate, ground granulated blast furnace slag (calcium melilite), calcium bentonite, calcium hydroxide and flyash class C. Calcium participates to the chemical reaction through alkalinisation creating a (Ca,M)-(Si-O-Al-O-Si-O) based inorganic polymer matrix, the benefit of adding a calcium containing compound is to allow a reaction between the powder mixture and the liquid composition at ambient temperature and an improved compressive strength of the manufactured object. The preferred particle size distribution of the calcium containing compound is: 4 < D₁₀ < 8 µm, D₅₀ < 10 µm, D₉₅ < 30 µm.
d) Optionally anhydrous metasilicates like potassium silicate, sodium silicate and lithium silicate in powder form having a particle distribution with D₅₀ beween 5 and 50 µm. Preferably the powder mixture comprises 0 to 10 wt% of the anhydrous metasilicate by weight of the final powder mixture. The use of a metasilicate powder allows for a decrease of the amount of alkali metal silicate in the liquid composition. The reduction of the amount of alkali metal silicate in the liquid composition increases the Si:M molar ratio and consequently reduces the alkalinity of the binder, this aspect improve the life of print heads and fluid deposition equipment. The anhydrous metasilicate has a preferred particle size distribution 5 < D₁₀ < 8 µm, D₅₀ < 10 µm. D₉₅ < 30 µm; and
e) Optionally additives including: basalt fibers, glass fibers, carbon fibers, SiC fibers (silicon carbide). These additives improve the mechanical strength of the manufactured object and especially the tensile strength thereof. Preferably the fibers have a maximum length in the range of 1 to 3 mm. It is preferred to add 2 to 8 wt% of the final powder mixture.

The liquid composition ejected by the piezoelectric inkjet system has rheological, chemical and physical properties suitable for use with the particulate material/powder mixture. The rheological properties allow the reagent to be ejected by the piezoelectric inkjet system.

The liquid composition characteristics preferably comprise one or more of the following:
a) Viscosity between 8 and 30 mPa·s. The ideal viscosity enables a liquid to be pulled and pushed out of the nozzle chamber. Lower viscosity would create air bubbles while higher viscosity would clog the nozzles. The viscosity of the reagent can be adjusted for instance by changing the fluid temperature. A viscosity within this range also allows to control the impregnation of the layer to avoid "bleeding" and keep the fluid within the layer boundaries as specified in for instance a CAD model of the object to be manufactured;
b) a surface tension between 20 and 40 dynes. The surface tension within this range avoids dripping from the nozzles and achieves a sufficient wetting of the powder and contact angle of the drops with the powder mixture constituents;
c) A maximum particle size of 2 µm. Particle sizes larger than 2 µm would not pass through the filters and/or clog the nozzles. Particles that may be added are for instance pigments to colour the manufactured object in selected positions and with a selected colour;
d) A maximum density/specific gravity between 1.2 and 1.6 g/cm3. Density and specific gravity affect other rheological parameters like viscosity and surface tension; and/or
e) A newtonian behaviour of the liquid. In a non-newtonian fluid the relation between shear stress and shear rate is non-linear, which would also affect the viscosity and would reduce the predictability of the drop deposition on a substrate.

Another parameter of the liquid composition is the compatibility of the print heads and all the materials in contact with the fluid. The print head materials and/or the fluid delivery system may be customized to have the best chemical compatibility with the alkaline liquid composition.

Most print heads are not suitable for this purpose because of the poor chemical compatibility with the reagent. Besides this many print heads find uses and applications in the graphic industry where alkaline liquids above pH 10 are not common and print heads would require expensive and unusual materials to withstand corrosive chemicals.

In fig.2 is shown a schematic section of the internal structure of a print head, each material in contact with the fluid have to be compatible with the reagent including tubes and ink delivery systems (pH between 12 and 14).

The most sensitive parts of the print heads are: nozzle plate, flink, rocktrap, filters, main body materials, coatings of the reservoir walls and tubes. Most of manufacturers use for instance a polyimide with good chemical resistance to acid but not to bases like standard polyimide.

The liquid composition has a pH preferably between 12 and 14. A pH below 14 avoids excessive corrosiveness and will have a relatively good chemical compatibility with the print head materials. Therefore, in the liquid composition highly corrosive and alkaline chemicals like sodium/potassium/lithium hydroxide have been avoided. These chemicals are often used in alkali activated cements and concrete, the concentration needed to trigger the reaction is user hostile and corrosive to many materials.

As indicated above, anhydrous metasilicates like potassium silicate, sodium silicate and lithium silicate in quantities between 0 and 8 % in powder form in the powder mixture can decrease the amount of (K,Na,Li)₂O necessary in the fluid, thus increasing the SiO₂:(K,Na,Li)₂O molar ratio and consequently decreasing considerably the alkalinity of the binder. This improves the life of print heads and fluid deposition equipment. It is preferred to use potassium silicate in powder form because of better solubility in water. It is preferred that the metasilicate has a particle size below 5-10 µm, such that the particles dissolve soon after (e.g. within minutes) the liquid composition is dispensed by the piezoelectric system.

The molar ratio Si:M (or in terms of oxides SiO:M₂O) may be varied to control the corrosiveness and alkalinity of the fluid. The mole ratios of the reagent fluid are preferably are preferably in the following ranges:

| | |
|---|---|
| Si:M | 0.7 to 1.5; and/or |
| M:H₂O | 0.002 to 0.6 |

or in terms of corresponding oxides:

| | |
|---|---|
| SiO₂:M₂O | 1.4 to 3, preferably 1.6 to 2.2; and/or |
| M₂O:H₂O | 0.001 to 0.3 |

The liquid composition comprises alkali metal silicate, preferably sodium, lithium or potassium silicate, with a molar ratio SiO₂:M₂O in the range of 1.4 to 3 preferably 1.6 to 2.2. The molar ratio is inversely proportional to the alkalinity/corrosiveness. A high corrosiveness reduces the print head lifetime. A molar ratio < 1.4 might improve mechanical performances but would damage the print heads, a molar ratio > 3 would create a weaker object because of the relation between molar ratio, Si:Al and sialate link affecting the number of siloxane and sialate bonds. The silicates could also be used in small quantities in an anhydrous powder form but it is preferred to supply the alkali metal silicate in a liquid form to have a homogenous liquid distribution of poly(siloxonate). The soluble alkali metal silicates are fully dissolved in a water solution based on 1 5% and 45% by weight of alkali metal silicate in the total liquid composition. Most preferred is potassium silicate.

Potassium silicates may be produced by melting primary sand and potash at elevated temperature, e.g. 1350 °C according to the reaction nSiO₂ + K₂CO₃ = M₂O*nSiO₂ + CO₂. The result is a potassium silicate in powder form, when particles enter in contact with water the ionic bond between alkali and oxygen is broken through a mechanism of depolymerisation. Potassium silicate is especially suited to print heads technology because, compared to the same molar ratio of sodium silicate, the potassium silicate is approximately 10 times less viscous and 10 times more soluble. The liquid composition may further comprise surfactants and/or nonionic dynamic wetting agent and/or a molecular defoamer, preferably selected from: Fatty alcohol ethoxylates, Alkylphenol ethoxylates, Ethoxilated amines and/or fatty acid amides, Glycerol Alkyl Polyglucosides, Amine oxides, Sulfoxides, Phosphine oxides, lignin sulfonates. Additives to adjust rheological properties like surface tension may be added in quantities between 0% and 3% by weight of the total liquid composition.

Optionally the liquid composition can also include a thickening agent to tweak the viscosity. This thickening agent might be added in quantities between 0% and 5% by weight of the total liquid composition.

Once the first layer of powder mixture has been spreaded and compacted the print heads or array of print heads pass over the object ejecting the reagent on the substrate in selected parts of the compacted layer of powder. The total amount of liquid composition deposited on the powder material layer ranges between 10% and 25% by weight of the total of the powder mixture and the liquid composition, at positions to be wetted, viz. where the object is to be formed.

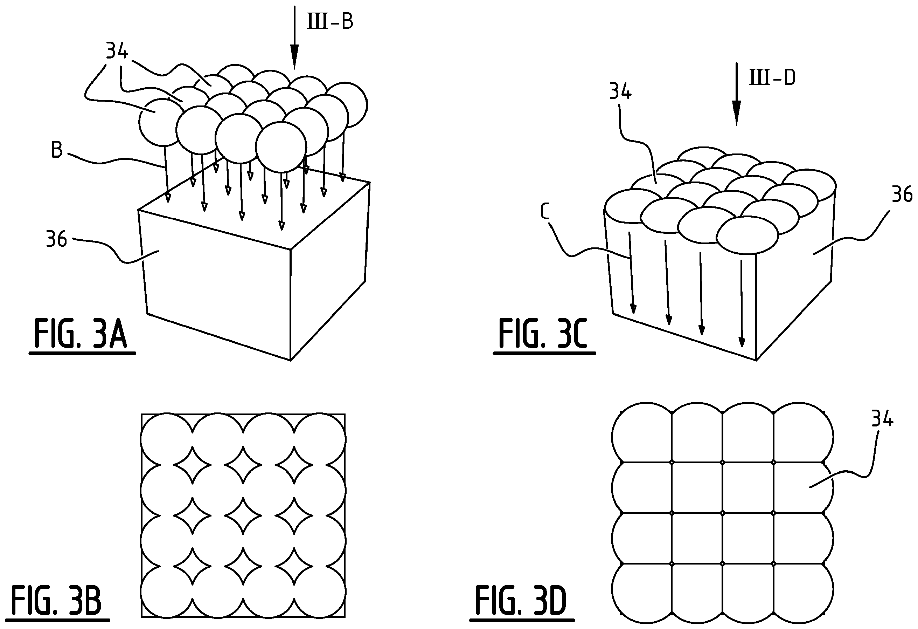

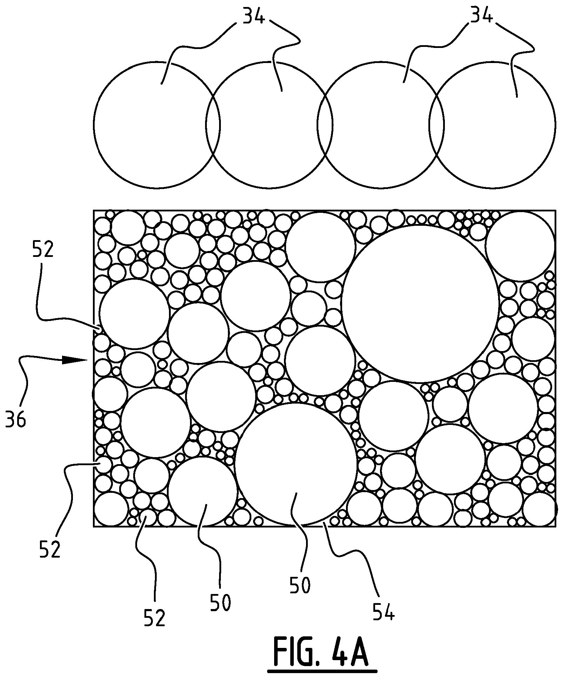

As shown in Fig. 3A and 3B, the print head nozzles, driven by a motion control system, place the droplets 34 following a specific pattern to facilitate a homogeneous single pass distribution of the binder on the powder layer / substrate 36 as indicated with arrow B. This will thoroughly cover the entire surface intended to be part of the object. The powder mixture will be wetted by a droplet once the drop gets in contact with the powder and thereafter the liquid composition of the droplet will penetrate the powder layer as shown schematically with the arrow C in Fig. 3C. The print heads allow to specifically control the droplet size and thereby the amount of fluid ejected onto the powder layer. The powder layer thickness to be applied depends on the stoichiometry of the chemical reaction and consequently on the droplet size and drop positioning (e.g. distance between nozzles of the print head and the drop firing frequency) on the substrate. Fig. 4A shows a cross section of powder layer 36, with droplets 34 positions above the layer. The powder layer comprises the aggregate particles 50, aluminosilicate oxide based compound particles 52 and voids 54.

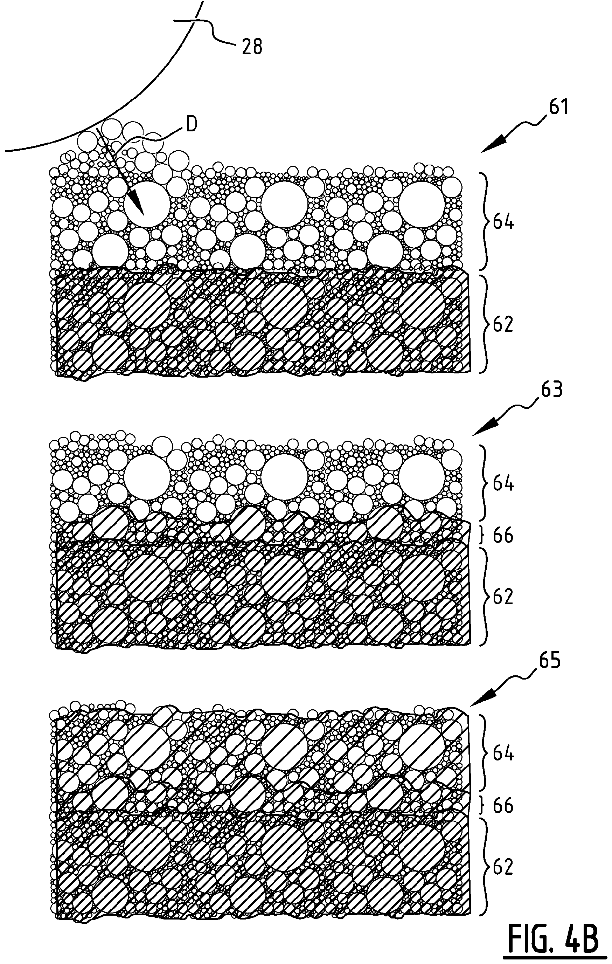

Fig. 4B shows the depositing of a new layer of powder 64 on a powder stack 61, wherein the new layer of powder 64 is distributed and compacted onto an already present layer 62, which has already reacted with the liquid composition. The new layer 64 is distributed and compacted by the roller 28. After compaction, as shown in stack 63, the new layer of powder will react partially a the interface with the previous layer 62, wherein still liquid composition is present which will react with the interfacial part 66 of the new layer 64.

In other words, when a new layer of powder is deposited on a layer of inorganic polymer on the powder bed, the new layer is not cured but it stays in position because of the thyxotropic behaviour of the paste formed by the previous layer 62 and the liquid composition below. Therefore, paste and powder get mixed at the interface 66 with the powder coming from the new layer .

Finally, the liquid composition is added to stack 65, wherein also to the new layer of powder there is added the liquid composition from above, and a paste is formed wherein the powder material is reacting with the liquid composition.. Thus, although the object may have some variance of the degree of polymerization across the powder layers, due to the reaction also starting from the lower layers, the variance will be lowered.

When the droplets of liquid composition touch the powder layer, they will react with each other, including alkalination and polycondensation. The liquid diffuses towards the bottom of the layer flowing through the voids 54 between aggregate particles 50 and aluminosilicate oxide based compound particles 52, as shown Fig. 5.

In order to decrease the curing time, a heat treatment like infrared, microwave and any other source of heat is applied. This speeds up the chemical reaction and polycondensation degree of the final inorganic polymeric matrix. The heat source may be directly applied on the printing system to heat up the printing bed using for instance a quartz heat lamp pointing at the substrate and moving with the motion control system. Additionally or alternatively, the powder box containing the object and unreacted powder is removed and positioned in an oven for heat treatments when the printing of the object is finished.

The print head may be configured to heat up the liquid composition up to 60 °C. This elevated temperature allows to control the viscosity and to decrease the curing time, to facilitate the polycondensation process and to allow a homogenous spreading of the fluid through the particulate material.

### Chemical reaction

The following describes the chemical reactions as thought to occur upon the addition of the liquid composition onto the powder layer.

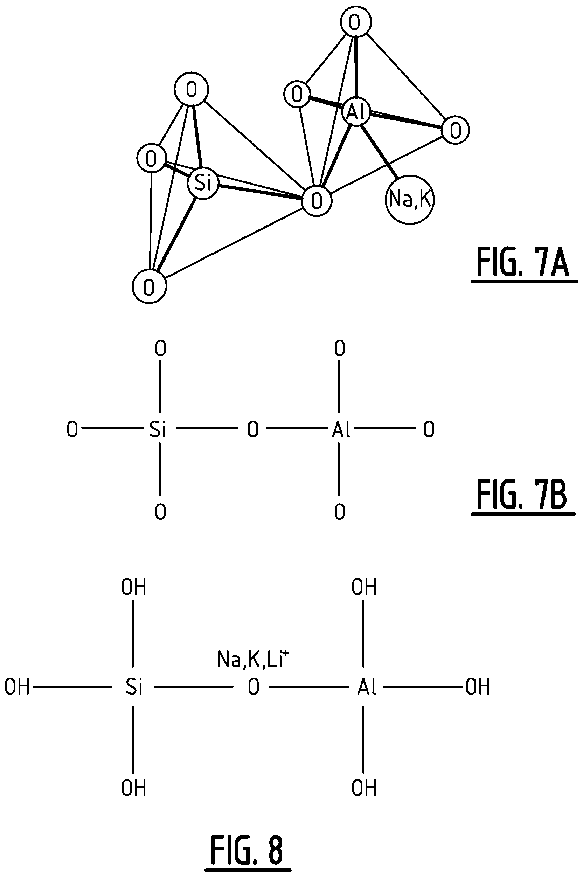

The reaction produces AlO₄ and SiO₄ tetrahedral tridimensional frameworks linked by shared oxygens such as sialate, sialate siloxo, silatedisiloxo and polysialate. In Fig. 7A and 7B, a sialate tetrahedral structure with a unit of AlO₄ and SiO₄.
The following reaction is thought to occur. The covalent bond Si-O-Al forms in an alkaline medium. The Al hydroxide groups react with a further hydroxide ion in the solution to form aluminium tetrahydroxide (Al(OH)₃ (s) + OH⁻ (aq) ---> [Al(OH)₄]⁻, in bases it acts as a Lewis acid, becoming a receptor in alkaline solutions). The Na,K⁺ cation balances the negative charge being strongly attracted to the sialate molecule. The Si:Al atomic ratio defines the polymeric structures of inorganic mineral polymers from sialate (Si:Al = 1) to polysialate (Si:Al>3). Sialate is abreviation for alkali silicon oxo aluminate. With the term polysialate is intended to identify all mineral inorganic polymers containing at least one (Na,K, Li, Ca)(Si, O, Al)(Na,K,Li,Ca)-sialate unit.

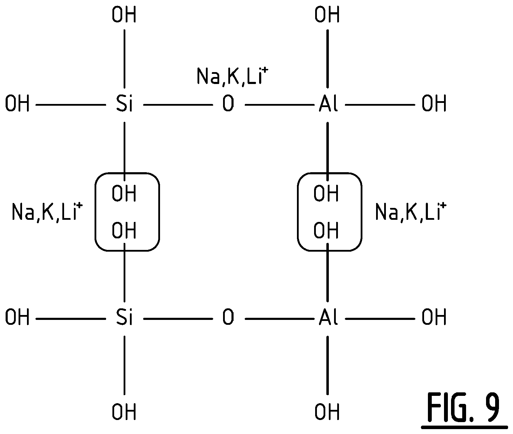

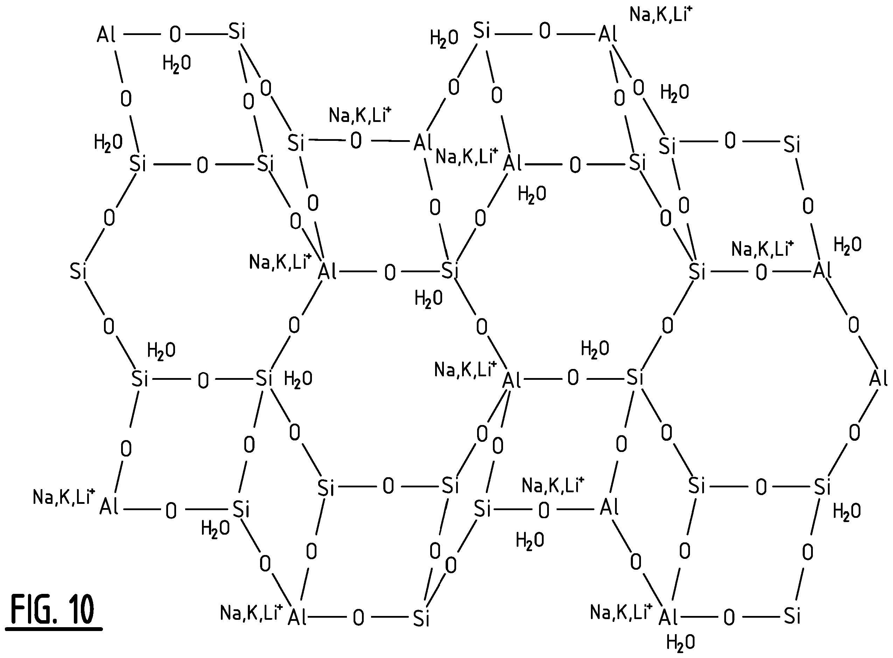

The polymerization process combines smaller molecules (oligomers) present in the raw materials into a covalent bond 3-dimensional network. The four main phases of the chemical reaction are: alkalination (Fig. 8), polycondensation (Fig. 9) and polymerization (Fig. 10). The produced inorganic polymer material is often referred to as a geopolymer.

The chemical bond of inorganic polymers fabricated with binder jetting additive manufacturing techniques is slightly different from conventionally mixed mineral polymers. The particulate material is not mixed by a mixer with the liquid composition, but the liquid is allowed to diffuse into the particulate material. This may result in a produced object that has a lower strength when compared to mixed material systems. It is however observed that the strength is reduced relatively little, even though there is no mixing. A reduction in compressive strength may be at most 20%. The supply of liquid of the present methods at a small scale (e.g. nanoscale) using piezolectric printheads allow to eliminate the necessity of conventional mixing, reduce the water/cement amount and therefore allows the present rethoughtmaterial system.

One of the most common assumptions is the fact that particles of aluminosilicate precursors dissolve to create the material matrix, this technique called alkali activation requires highly caustic Na, K or LiOH content (in the range of 8-20 molarity). Hence, this technique is user hostile, corrosive and inapplicable for inkjet technologies.

The present methods are beneficial, because the reaction occurs only on the surface of the aluminosilicate, but it is found that still the manufactured object has good mechanical properties such as a high compressive strength. No mixing is needed to dissolve particles. A relatively superficial reaction or polycondensation. The aluminosilicate oxide based compound articles do not disaggregate or dissolve as in alkali activated materials but they react chemically with the liquid composition shown in Fig.6.

Another important difference using additive manufacturing techniques is the water to cement ratio. In traditional inorganic polymer concrete, the low water content is important to achieve high compressive strength but low flowability. Rheological properties of fresh concrete allows the material to have a specific flowability and slump value important in traditional techniques. In additive manufacturing there is no slump value to take into account because the material does not need to flow in a mould or through a mixer pipe. Therefore water ratios can be controlled and decreased if necessary to increase compressive strength and/or thixotropic behaviour of the paste forming the layers.

The liquid composition enters the powder layer and comes into contact with the particles, fills the interstitial voids 54 and reacts on the aluminosilicate oxide based compound particle surfaces 53, and preferably also the aggregate material surface 51. The polymerisation, starting from the particle surfaces 51 and 53, results in a material matrix 56 between the particles of the powder layer (Fig. 6). The matrix 56 is composed of micelles having an approximate size ranging between 0.005 to 0.05 µm, for instance 0.01 µm, through what was previously the particulate material voids 54.

In the present additive manufacturing method, beneficially and by virtue of the properties of the liquid composition combined with the powder material described above, the mixing of powder and fluid happens on the printing bed at a nanoscale thus it is preferred to allow a deep impregnation of the layer from top to bottom to achieve a homogeneous polycondensation and polymerization.

Some additives may also be introduced in the particulate mixture to facilitate the liquid to spread through capillary action and achieve a more homogeneous matrix. For instance, salts like anhydrous potassium or sodium silicate in a powder form in quantities between 0.5 and 10 % by weight of the total particulate material may be added to obtain a more homogeneous spread and a less alkaline liquid reagent. Potassium silicate is preferred for his ability to dissolve quicker than sodium silicate. Heating the liquid composition to a temperature above 20 °C may be done in order to facilitate the dissolution of anhydrous potassium silicates particles.

The manufactured object may have a varying degree of polymerization from top to bottom within the layers, where poly(sialate-siloxo) groups have a decreased chain length at the lower end of the layer, furthest away from where the droplets of liquid composition were applied due to the diffusion process of the liquid from top to bottom. A more homogeneous distribution of the reagent till the bottom of the layer is therefore preferred, also in order to obtain a higher and more homogeneous material strength compared to an object with a less homogeneous diffusion of the liquid composition in the powder layer.

It is preferred to keep the object enclosed to avoid evaporation of water during the initial curing/polymerizing process, since water of the liquid composition also reacts and binds to the polymer matrix. Therefore, the method preferably uses the unreacted particulate material to cover the printed object and avoid direct contact with air, by leaving the unreacted powder onto the production surface until the object is finished and fully cured. Water particles are part of the material matrix in the form of OH-groups and may optionally be removed through dehydroxylation using high temperature heat treatments similar to conventional ceramic processes. Another difference of the present method with the production of other ceramic materials is the absence of a high temperature heat treatment (normally above 800 °C) to achieve good mechanical performances and that there is no shrinkage of the object during the curing process.

The chemical process and polycondensation may be likened and compared to the synthesis of some organic polymers like phonoplast, Bakelite (phenol formaldehyde thermosetting plastics) widely used in additive manufacturing.

### Example 1 (not according to the invention)

This example relates to the manufacture of a ceramic inorganic polymer object using metakaolin.

The piezoelectric print head parameters to achieve the correct stoichiometric proportions and layer impregnation are an offset of print head module of 63.5 µm to achieve a total 400 dpi resolution and homogenous coverage for a single pass application. A waveform specifically developed for the reagent. A volume of 120-150 picoliters as droplet size using a frequency from 10 to 20 kHz.

The aluminosilicate oxide based compound is metakaolin, or calcined kaolin or dehydroxylated kaolin, which is kaolin where between the layers of SiO₂ and Al₂O₃ in proportions of 1:2 water is imbedded and can be evaporated through heat treatment by calcination at a temperature between 600 and 750 degrees. Metakaolin is sieved to achieve a particle size distribution with a D₁₀ > 5-10 µm with a chemical composition containing Ca < 10% and molar ratio 1.5 < SiO₂:Al₂O₃ < 2.5. The total amount of SiO+Al₂O₃ = 70-99% by weight of the total chemical composition of the metakaolin. The amount of metakaolin added to the particulate material 15-35 % by weight. An example of a suitable metakaolin product in terms of mineral composition comprises 54-56 wt% SiO₂, 40-42 wt% Al₂O₃, < 1.4 wt% Fe₂O₃, < 3 wt% TiO₂, <0.1 wt% CaO and the rest impurities, with D₁₀ ~ 2 µm, D₅₀ ~ 5 µm and D₉₀ ≈ 25 µm before sieving.

The inorganic aggregate or filler is cristobalite sand and/or granite powder, 30-55 % by weight. The total particle size distribution of the mixed powder is characterised by D₅₀ < 30 µm, D₁₀ < 10 µm, D₉₀ < 70 µm.

The powder compacted density is between 1.2 and 1.6 g/cm³.

The powder is mixed for one hour in a powder mixer until a homogenous powder is obtained.

The total reactant amount is between 65% and 85% by weight of the final mix between reagent and reactant.

The liquid composition or reagent composition has been chosen according to the stoichiometry between reactant and reagent specified in the description of the preferred embodiments. The preferred composition is:
A solution of distilled water between 50% and 70% by weight, potassium silicate having a SiO₂:K₂O Molar Ratio 1.8, between 30% and 50% by weight and from 0 to 2% by weight of ethoxylated-2,4,7,9-tetramethyl-5-decyn- 4,7- diol (surfactant).

The temperature at which the reagent is ejected is 20-50 °C, preferably 30-50 °C, the viscosity is between 10 and 14 mPa·s, the surface tension is 20-40 dynes and the density is between 1.2 and 1.5 g/cm³.

The total reagent amount is between 15% and 35% by weight of the final mix between reagent and reactant.

### Process and machine settings:

The above materials are intended for use a process with a layer height of 150 µm. The layer height is proportional to the drop size to achieve the right stoichiometry between reactant and reagent. After 3-4 hours from the termination of the additive manufacturing of the object, the printing box is removed with the object embedded in the unbinded powder positioned in an oven and cured for 1-2 hours at 80/95 °C, preferably avoiding temperatures higher than 100 degrees to avoid cracks in the object. Preferably the object is cured using a microwave heater, in this case the object would cure in about 30-60 seconds, this happens because the reactant mixture is polyelectrolyte thus polycondensation would happen faster than a conventional oven.

### Object material properties

Depending on the product requirements the final material properties can be adjusted tweaking the manufacturing process and the machine parameters like drop size controlling the reagent deposition amount, layer height, substrate bulk density, compaction and post processing techniques. For the above process, typical values of the produced object are:
Density from 1.7 to 1.9 g/cm³.
Compressive strength from 10 MPa to 35 MPa.

### Example 2

This example relates to the manufacture of a ceramic inorganic polymer object using fly Ashes class F and slag (ground granulated blast furnace slag).

The same printing parameters are used as example 1.

The particulate material comprises 50 to 70 wt% of the aluminosilicate oxide compound fly ashes class F having a particle size distribution with D₁₀ < 4 µm, D₅₀ < 20 µm, D₉₅ < 90 µm, a Ca content < 5 wt% and 1.5< SiO₂:Al₂O₃ < 2.5, SiO₂+Al₂O₃ = 60-80% by weight. An example of a suitable flyash class F material that may be used in terms of mineral composition comprises 51 wt% SiO₂, 23 wt% Al₂O₃, 6 wt% Fe₂O₃, 3 wt% CaO and impurities with D₁₀ ≤ 4 µm, D₅₀ ≤ 20 µm and D₉₀ ≤ 90 µm. The preferred filler is cristobalite sand, 20 to 40 % by weight. The particulate material further comprises GGBS (ground granulated blast furnace slag) 5 to 15% by weight.

The powder is mixed for one hour in a powder mixer until a homogenous powder is obtained.

The powder compacted density is between 1.4 and 1.7 g/cm³.

The total reactant amount is between 77% and 90% by weight of the final mix between reagent and reactant.

The liquid/reagent composition has been chosen according to the stoichiometry between reactant and reagent specified in the description of the preferred embodiments. The preferred composition is:
Solution of distilled water between 50% and 70% by weight and potassium silicate (SiO₂:M₂O molar ratio 1.8) around 50 wt%, and 30% by weight of the reagent and from 0 to 2% Ethoxylated 2,4,7,9 tetramethyl 5 decyn- 4,7- diol (surfactant).

The temperature at which the reagent is ejected is 20-50 °C, preferably 30-50 °C, the viscosity is between 10 and 14 mPa·s, the surface tension is 20-40 dynes and the density is between 1.2 and 1.5 g/cm³.

The total reagent amount is between 10% and 23% by weight of the total mix between reagent (liquid composition) and reactant (powder composition).

### Process and machine settings:

The above materials are intended to be used in a process with a layer height of around 200 µm.

The printing box is removed from the machine and left to cure at ambient temperature for 24-48 hours. The object will gain 90% of the full strength after 72 hours.

A low temperature curing process can also be used to improve curing time and facilitate the chemical reaction. The printing box can be positioned in the oven at a temperature between 40 and 70 °C for 24 hours, this aspect can improve the compressive strength, longer curing time can improve the polymerization process this compressive strength, 60 degrees is the preferred temperature observed.

### Object material properties:

Depending on the product requirements the final material properties can be adjusted tweaking the manufacturing process and the machine parameters like drop size, controlling the reagent deposition amount, layer height, powder mix bulk density, compaction and post processing techniques. For the above process, typical values of the produced object are:
Density from 1.7 to 2 g/cm3.
Compressive strength from 10 MPa to 35 MPa.

### Example 3

This example relates to the manufacture of a ceramic inorganic polymer object using metakaolin and slag (ground granulated blast furnace slag).

The same printing parameters are used as examples 1 and 2.

The particulate material comprises 40 to 70 wt% of metakaolin with a particle size distribution characterized by D₁₀ < 8 µm, D₅₀ < 10 µm, D₉₅ < 30 µm, preferably with a particle size larger than 4 µm to avoid flocculation, having a molar ratio 1.5 < SiO₂:Al₂O₃ < 2.5, SiO₂+Al₂O₃ = 70-90% by weight of the metakaolin. An example of a suitable metakaolin product in terms of mineral composition comprises 54-56 wt% SiO₂, 40-42 wt% Al₂O₃, < 1.4 wt% Fe₂O₃, < 3 wt% TiO₂, <0.1 wt% CaO and the rest impurities, with D₁₀ ≈ 2 µm, D₅₀ ≈ 5 µm and D₉₀ ≈ 25 µm before sieving. The particulate material further comprises 20-40 wt% of a filler like cristobalite sand and GGBS (ground granulated blast furnace slag) 5 to 15% by weight.

The particle size distribution of the mixed powder is characterised by D₅₀ < 30 µm, D₁₀ < 10 µm, and D₉₀ < 90 µm.

The powder is mixed for one hour in a powder mixer until a homogenous powder is obtained.

The powder compacted density is between 1.2 and 1.6 g/cm³.

The total reactant amount is between 77% and 90% by weight of the final mix between reagent and reactant.

The liquid/reagent composition has been chosen according to the stoichiometry between reactant and reagent specified in the description of the preferred embodiments. The preferred composition is:
A solution of distilled water between 50% and 70% by weight and potassium silicate (SiO₂:K₂O Molar Ratio 1.8) around 50% and 30% by weight and from 0 to 2% Ethoxylated 2,4,7,9 tetramethyl 5 decyn- 4,7- diol (surfactant).

The temperature at which the reagent is ejected is 20-50 °C, preferably 30-50 °C, the viscosity is between 10 and 14 mPa·s, the surface tension is 20-40 dynes and the density is between 1.2 and 1.5 g/cm³.

The total reagent amount is between 10% and 23% by weight of the total mix between reagent and reactant.

### Process and machine settings

The materials above are intended to be used in a process with a layer height of 200 µm.

The printing box is removed from the machine and left to cure at ambient temperature for 24-48 hours. The object will gain 90% of the full strength after 72 hours.

A low temperature curing process can also be used to improve curing time and facilitate the chemical reaction. The printing box can be positioned in the oven at a temperature between 40 and 70 °C for 24 hours. This may improve the compressive strength, wherein a longer curing time can improve the polymerization process and therewith the compressive strength. 60 °Cis the preferred temperature.

In addition to the following method an infrared light pointing at the substrate and mounted on the Y axis of the machine can be adopted, this method can decrease the curing time and facilitate the reaction, the polycondensation time and ultimately the accuracy of the object.

### Object material properties

Depending on the product requirements the final material properties can be adjusted tweaking the manufacturing process and the machine parameters like drop size, controlling the reagent deposition amount, layer height, powder mix bulk density, compaction and post processing techniques. For the above process, typical values of the produced object are:
Density from 1.6 to 1.9 g/cm³_{.}
Compressive strength from 10 MPa to 35 MPa.

### Example 4

This example relates to the manufacture of a ceramic inorganic polymer object using Flyashes, slag (Ground granulated blast furnace slag) and anhydrous potassium silicate powder.

The same printing parameters are used as example 1.

The particulate material composition has been chosen according to the stoichiometry between reactant and reagent specified in the description of the preferred embodiments. The preferred composition is:
50 to 70 % by weight of flyashes class F, a filler like granite powder 20 to 40 % by weight, GGBS (ground granulated blast furnace slag) 5 to 15% by weight, and anhydrous potassium silicate powder 1 to 8% by weight. An example of a suitable flyash class F material that may be used in terms of mineral composition comprises 51 wt% SiO₂, 23 wt% Al₂O₃, 6 wt% Fe₂O₃, 3 wt% CaO and impurities with D₁₀ ≤ 4 µm, D₅₀ ≤ 20 µm and D₉₀ ≤ 90 µm.

The particle size distribution of the mixed powder is characterised by D₅₀ < 30 µm, D₁₀ < 10 µm, D₉₀ < 90 µm. The powder is mixed for one hour in a powder mixer until a homogenous powder is obtained.

The powder compacted density is between 1.4 and 1.7 g/cm3.

The total reactant amount is between 77% and 90% by weight of the final mix between reagent and reactant.

The liquid/reagent composition has been chosen according to the stoichiometry between reactant and reagent specified in the description of the preferred embodiments. The preferred composition of the liquid composition is according to example 3.

The temperature at which the reagent is ejected is 20-50 °C, preferably 30-50 °C, the viscosity is between 10 and 14 mPa·s, the surface tension is 20-40 dynes and the density is between 1.2 and 1.5 g/cm³.

The total reagent amount is between 10% and 23% by weight of the total mix between reagent and reactant.

### Process and machine settings:

The above materials are intended to be used in a process with a layer height of 200 µm.

The printing box is removed from the machine and left to cure at ambient temperature for 24-48 hours. The object will gain 90% of the full strength after 72 hours.

A low temperature curing process can also be used to improve curing time and facilitate the chemical reaction. The printing box can be positioned in the oven at a temperature between 40 and 70 °C for four hours.

### Object material properties

Depending on the product requirements the final material properties can be adjusted tweaking the manufacturing process and the machine parameters like drop size, reagent deposition amount, layer height, substrate tapped density, compaction and post processing techniques. For the above process, typical values of the produced object are:
Density from 1.7 to 2 g/cm³.
Compressive strength from 10 MPa to 35 MPa.

## Claims

1. Method for producing an object by additive manufacturing, the method comprising at least one repetition of the steps;
- providing a layer of particulate material on a surface;
wherein the particulate material comprises:
15 to 70 wt% of an aluminosilicate oxide based compound having a Si:Al molar ratio in the range of 0.7 to 2.5, the aluminosilicate oxide based compound being an anhydrous pozzolanic aluminosilicate compound, and
an inorganic aggregate;
- compacting the layer of particulate material provided on the production surface whereby a compacted layer of particulate material having a density of between 1.4 and 1.8 g/cm³ is formed;
- providing a liquid composition on the compacted layer of particulate material, wherein the liquid composition is provided on the compacted layer using a piezoelectric print head, wherein the liquid composition is provided in drops having a drop size in a range of 100 to 200 picoliter, wherein the liquid composition is an aqueous solution comprising 10 to 50 wt% alkali metal silicate having a molar ratio of Si:M in the range of 0.7 to 1.5, wherein M is an alkali metal; and
- forming the object by allowing the liquid composition to react with the particulate material.

2. Method according to claim 1, wherein the anhydrous pozzolanic aluminosilicate compound is a calcined anhydrous pozzolanic aluminosilicate compound,
wherein preferably the anhydrous pozzolanic aluminosilicate compound is selected from the group consisting of fly ash class F, metakaolin, pozzolanic volcanic ash.

3. Method according to claim 1 or 2, wherein the aluminosilicate oxide based compound is fly ash class F or metakaolin.

4. Method according to claim 1, 2 or 3, wherein the aluminosilicate oxide based compound comprises a total amount of Si and Al in the range of 35 to 58 wt%; and/or
wherein the aluminosilicate oxide based compound comprises at most 10 wt% Ca; and/or wherein the particulate material has one or more of
- a mole ratio of M:Si in the range of 0 to 0.4,
- a mole ratio of M:A1 in the range of 0 to 1,
- a mole ratio of Si:Al in the range of 1 to 3,
- a mole ratio of Ca:Si in the range of 0 to 0.6,
wherein M is an alkali metal.

5. Method according to any one of the preceding claims, wherein the inorganic aggregate comprises at least one from the group consisting of quartz, silica, cristobalite, zircon, chromite, staurolite, graphite, corundum, granite and alkali feldspathic rock .

6. Method according to any one of the preceding claims, wherein the compacted layer of particulate material has a thickness in the range of 40 to 400 µm, preferably 60 to 200 µm.

7. Method according to any one of the preceding claims, wherein the particulate material has a particle size distribution with a mass diameter D₉₀ equal to or smaller than one thickness of the compacted layer of particulate material, preferably half a thickness of the compacted layer of particulate material; and/or
wherein the particle size distribution has a mass diameter D₁₀ in the range of 5 to 20 µm, and a mass diameter D₅₀ in the range of 20 to 50 µm and D₉₀ in the range of 50 to 100 µm.

8. Method according to any one of the preceding claims, wherein the particulate material further comprises 5 to 15 wt% of a calcium-containing aluminosilicate oxide compound comprising at least 34 wt% Ca,
wherein preferably the calcium-containing compound is selected form the group consisting of calcium disilicate, ground granulated blast furnace slag, calcium melilite, fly ash class C, and calcium hydroxide.

9. Method according to any one of the preceding claims, wherein the particulate material further comprises 0.5 to 5 wt% of an anhydrous metasilicate compound; and/or
wherein the particulate material further comprises 2 to 8 wt% of at least one from the group consisting of basalt fiber, glass fiber, carbon fiber, silicon carbide fibers.

10. Method according to any one of the preceding claims, wherein the liquid composition is provided on the compacted layer at a temperature in the range of 25 °C to 60 °C, preferably 30 °C to 50 °C; and/or,
the method further comprising, applying a heat treatment during a repetition of the steps using electromagnetic radiation, preferably infrared light or microwave radiation.

11. Method according to any one of the preceding claims,
wherein the liquid composition comprises at least one selected from the group consisting of fatty alcohol ethoxylates, alkylphenol ethoxylates, ethoxilated amines, fatty acid amides, glycerol alkyl polyglucosides, amine oxides, sulfoxides, phosphine oxides, lignin sulfonates.

## Patentansprüche

1. Verfahren zur Herstellung eines Objekts durch additive Fertigung, wobei das Verfahren zumindest eine Wiederholung folgender Schritte umfasst:
- Aufbringen einer Schicht aus partikelförmigem Material auf eine Oberfläche;
wobei das partikelförmige Material aufweist:
15 bis 70 Gew.-% einer Verbindung auf Aluminosilikatoxid-Basis mit einem Si:Al-Molverhältnis im Bereich von 0,7 bis 2,5, wobei die Verbindung auf Aluminosilikatoxid-Basis eine wasserfreie puzzolanische Aluminosilikat-Verbindung darstellt, sowie
ein anorganisches Aggregat;
- Verdichten der auf der Produktionsoberfläche aufgebrachten Schicht aus partikelförmigem Material wodurch eine kompakte Schicht aus partikelförmigem Material gebildet wird mit einer Dichte zwischen 1,4 und 1,8 g/cm³;
- Bereitstellen einer flüssigen Zusammensetzung auf der kompakten Schicht aus partikelförmigem Material, wobei das Bereitstellen der flüssigen Zusammensetzung auf der kompakten Schicht unter Verwendung eines piezoelektrischen Druckkopfes erfolgt, wobei die Bereitstellung der flüssigen Zusammensetzung in Form von Tropfen erfolgt, mit einer Tropfengröße in einem Bereich von 100 bis 200 Pikoliter, wobei die flüssige Zusammensetzung eine wässrige Lösung ist, welche 10 bis 50 Gew.-% Alkalimetallsilikat mit einem Molverhältnis von Si:M im Bereich von 0,7 bis 1,5 umfasst, wobei M ein Alkalimetall darstellt; und
- Bilden des Gegenstandes indem man die flüssige Zusammensetzung mit dem partikelförmigen Material reagieren lässt.

2. Verfahren nach Anspruch 1, wobei die wasserfreie puzzolanische Aluminosilikat-Verbindung eine kalzinierte wasserfreie puzzolanische Aluminosilikat-Verbindung ist,
wobei die wasserfreie puzzolanische Aluminosilicat-Verbindung vorzugsweise aus der Gruppe ausgewählt ist, bestehend aus Flugasche der Klasse F, Metakaolin und puzzolanischer Vulkanasche.

3. Verfahren nach Anspruch 1 oder 2, wobei die Verbindung auf Aluminosilikatoxid-Basis Flugasche der Klasse F oder Metakaolin darstellt.

4. Verfahren nach Anspruch 1, 2 oder 3, wobei die Verbindung auf Aluminosilikatoxid-Basis eine Gesamtmenge an Si und Al im Bereich von 35 bis 58 Gew.-% umfasst; und/oder wobei die Verbindung auf Aluminosilikatoxid-Basis höchstens 10 Gew.-% Ca umfasst; und/oder wobei das partikelförmige Material eines oder mehrere der folgenden Merkmale aufweist:
- ein Molverhältnis von M:Si im Bereich von 0 bis 0,4,
- ein Molverhältnis von M:AI im Bereich von 0 bis 1,
- ein Molverhältnis von Si:Al im Bereich von 1 bis 3,
- ein Molverhältnis von Ca:Si im Bereich von 0 bis 0,6,
wobei M ein Alkalimetall darstellt.

5. Verfahren nach einem der vorherigen Ansprüche, wobei das anorganische Aggregat zumindest eines ist aus der Gruppe bestehend aus Quarz, Siliziumdioxid, Cristobalit, Zirkon, Chromit, Staurolith, Graphit, Korund, Granit und Alkalifeldspatgestein.

6. Verfahren nach einem der vorherigen Ansprüche, wobei die kompakte Schicht aus partikelförmigem Material eine Dicke im Bereich von 40 bis 400 µm, vorzugsweise 60 bis 200 µm, aufweist.

7. Verfahren nach einem der vorherigen Ansprüche, wobei das partikelförmige Material eine Partikelgrößenverteilung mit einem Massendurchmesser D₉₀ aufweist, der gleich oder kleiner ist als eine Dicke der kompakten Schicht aus partikelförmigem Material, vorzugsweise als die Hälfte einer Dicke der kompakten Schicht aus partikelförmigem Material; und/oder wobei die Partikelgrößenverteilung einen Massendurchmesser D₁₀ im Bereich von 5 bis 20 µm und einen Massendurchmesser D₅₀ im Bereich von 20 bis 50 µm sowie D₉₀ im Bereich von 50 bis 100 µm aufweist.

8. Verfahren nach einem der vorherigen Ansprüche, wobei das partikelförmige Material ferner 5 bis 15 Gew.-% einer calciumhaltigen Aluminosilikatoxid-Verbindung mit zumindest 34 Gew.-% Ca enthält,
wobei die calciumhaltige Verbindung vorzugsweise ausgewählt ist aus der Gruppe bestehend aus Calciumdisilicat, gemahlener granulierter Hochofenschlacke, Calciummelilit-Flugasche Klasse C sowie Calciumhydroxid.

9. Verfahren nach einem der vorherigen Ansprüche, wobei das partikelförmige Material ferner 0,5 bis 5 Gew.-% einer wasserfreien Metasilikat-Verbindung umfasst; und/oder wobei das partikelförmige Material ferner 2 bis 8 Gew.-% zumindest eines Fasertyps aus der Gruppe bestehend aus Basaltfasern, Glasfasern, Kohlenstofffasern und Siliciumcarbidfasern umfasst.

10. Verfahren nach einem der vorherigen Ansprüche, wobei die flüssige Zusammensetzung auf die kompakte Schicht bei einer Temperatur im Bereich von 25°C bis 60°C, vorzugsweise 30°C bis 50°C, aufgebracht wird; und/oder,
das Verfahren ferner das Anwenden einer Wärmebehandlung während einer Wiederholung der Schritte unter Verwendung elektromagnetischer Strahlung, vorzugsweise Infrarotlicht oder Mikrowellenstrahlung, umfasst.

11. Verfahren nach einem der vorherigen Ansprüche,
wobei die flüssige Zusammensetzung zumindest eine Komponente aus der Gruppe bestehend aus Fettalkoholethoxylaten, Alkylphenolethoxylaten, ethoxilierten Aminen, Fettsäureamiden, Glycerinalkylpolyglucosiden, Aminoxiden, Sulfoxiden, Phosphinoxiden, Ligninsulfonaten aufweist.

## Revendications

1. Procédé de production d'un objet par fabrication additive, le procédé comprenant au moins une répétition des étapes suivantes :
- la fourniture d'une couche de matériau particulaire sur une surface ;
dans lequel le matériau particulaire comprend :
15 à 70 % d'un composé à base d'oxyde d'aluminosilicate présentant un rapport molaire de Si:Al dans la plage de 0,7 à 2,5, le composé à base d'oxyde d'aluminosilicate étant un composé d'aluminosilicate pouzzolanique anhydre, et
un agrégat inorganique ;
- le compactage de la couche de matériau particulaire prévu sur la surface de production, moyennant quoi une couche compactée de matériau particulaire présentant une densité entre 1,4 et 1,8 g/cm³ est formée ;
- la fourniture d'une composition liquide sur la couche compactée de matériau particulaire, dans lequel la composition liquide est prévue sur la couche compactée en utilisant une tête d'impression piézoélectrique, dans lequel la composition liquide est prévue en gouttes présentant une taille de goutte dans une plage de 100 à 200 picolitres, dans lequel la composition liquide est une solution aqueuse comprenant de 10 à 50 % en poids de silicate de métal alcalin présentant un rapport molaire de Si:M dans la plage de 0,7 à 1,5, dans lequel M est un métal alcalin ; et
- la formation de l'objet en laissant la composition liquide réagir avec le matériau particulaire.

2. Procédé selon la revendication 1, dans lequel le composé d'aluminosilicate pouzzolanique anhydre est un composé d'aluminosilicate pouzzolanique anhydre calciné,
dans lequel de préférence, le composé d'aluminosilicate pouzzolanique anhydre est sélectionné à partir du groupe constitué de cendres volantes de classe F, de métakaolin, de cendres volcaniques pouzzolaniques.

3. Procédé selon la revendication 1 ou 2, dans lequel le composé à base d'oxyde d'aluminosilicate est constitué de cendres volantes de classe F ou de métakoalin.

4. Procédé selon la revendication 1, 2 ou 3, dans lequel le composé à base d'oxyde d'aluminosilicate comprend une quantité totale de Si et Al dans la plage de 35 à 58 % en poids ; et/ou
dans lequel le composé à base d'oxyde d'aluminosilicate comprend au plus 10 % en poids de Ca ; et/ou
dans lequel le matériau particulaire présente un ou plusieurs de
- un rapport molaire de M:Si dans la plage de 0 à 0,4,
- un rapport molaire de M:Al dans la plage de 0 à 1,
- un rapport molaire de Si:Al dans la plage de 1 à 3,
- un rapport molaire de Ca:Si dans la plage de 0 à 0,6,
dans lequel M est un métal alcalin.

5. Procédé selon l'une quelconque des revendications précédentes, dans lequel l'agrégat inorganique comprend au moins un du groupe constitué de quartz, silice, cristobalite, zircon, chromite, staurolite, graphite, corindon, granite et roche feldspathique alcaline.

6. Procédé selon l'une quelconque des revendications précédentes, dans lequel la couche compactée de matériau particulaire présente une épaisseur dans la plage de 40 à 400 µm, de préférence de 60 à 200 µm.

7. Procédé selon l'une quelconque des revendications précédentes, dans lequel le matériau particulaire présente une distribution de granulométrie avec un diamètre de masse D₉₀ égal ou inférieur à une épaisseur de la couche compactée de matériau particulaire, de préférence une moitié d'épaisseur de la couche compactée de matériau particulaire ; et/ou
dans lequel la distribution de granulométrie présente un diamètre de masse D₁₀ dans la plage de 5 à 20 µm, et un diamètre de masse D₅₀ dans la plage de 20 à 50 µm et D₉₀ dans la plage de 50 à 100 µm.

8. Procédé selon l'une quelconque des revendications précédentes, dans lequel le matériau particulaire comprend en outre de 5 à 15 % en poids d'un composé d'oxyde d'aluminosilicate contenant du calcium comprenant au moins 34 % en poids de Ca,
dans lequel de préférence, le composé contenant du calcium est sélectionné à partir du groupe constitué de disilicate de calcium, laitier granulé de haut-fourneau, mélilite de calcium, cendres volantes de classe C, et hydroxyde de calcium.

9. Procédé selon l'une quelconque des revendications précédentes, dans lequel le matériau particulaire comprend en outre de 0,5 à 5 % en poids d'un composé de métasilicate anhydre ; et/ou
dans lequel le matériau particulaire comprend en outre de 2 à 8 % en poids d'au moins une du groupe constitué de fibre de basalte, fibre de verre, fibre de carbone, fibres de carbure de silicium.

10. Procédé selon l'une quelconque des revendications précédentes, dans lequel la composition liquide est prévue sur la couche compactée à une température dans la plage de 25 C à 60 C, de préférence de 30 C à 50 C ; et/ou
le procédé comprenant en outre l'application d'un traitement thermique pendant une répétition des étapes en utilisant un rayonnement électromagnétique, de préférence un rayonnement à infrarouge ou microondes.

11. Procédé selon l'une quelconque des revendications précédentes, dans lequel la composition liquide comprend au moins un sélectionné à partir du groupe constitué d'éthoxylates d'alcool gras, éthoxylates d'alkylphénol, amines exthoxilées, amides d'acide gras, polyglucosides d'alkyle de glycérol, oxydes d'amine, sulfoxydes, oxydes de phosphine, sulfonates de lignine.
